# EUROPEAN PATENT SPECIFICATION

(11) **EP 2 492 927 B1**
(45) Date of publication and mention of the grant of the patent: **18.04.2018**
(21) Application number: 10824929.3
(22) Date of filing: 19.10.2010
(51) Int. Cl.: H01F 1/11, C01B 21/06, H01F 1/06, H01F 1/08, B82Y 30/00

(54) **FERROMAGNETIC PARTICLE POWDER, METHOD FOR PRODUCING SAME, ANISOTROPIC MAGNET AND BONDED MAGNET**
FERROMAGNETISCHES PARTIKELPULVER, VERFAHREN ZU SEINER HERSTELLUNG, ANISOTROPER MAGNET UND GEBUNDENER MAGNET
POUDRE DE PARTICULES FERROMAGNÉTIQUES, SON PROCÉDÉ DE FABRICATION, AIMANT ANISOTROPE ET AIMANT LIÉ

(30) Priority: 22.10.2009 JP 2009243834
(43) Date of publication of application: 29.08.2012
(73) Proprietor: Toda Kogyo Corp., Hiroshima-shi, Hiroshima 732-0828 (JP); Tohoku University, Aoba-ku Sendai-shi Miyagi 980-8577 (JP)
(72) Inventor: TAKAHASHI, Migaku, Sendai-shi Miyagi 980-8577 (JP); OGAWA, Tomoyuki, Sendai-shi Miyagi 980-8577 (JP); OGATA, Yasunobu, Sendai-shi Miyagi 980-8577 (JP); KOBAYASHI, Naoya, Otake-shi Hiroshima 739-0652 (JP)
(74) Representative: J A Kemp
(86) International application number: PCT/JP2010/068362
(87) International publication number: WO 2011/049080

(56) References cited:
- JP-A- 8 031 626
- JP-A- 2001 176 715
- JP-A- 2004 273 094
- JP-A- 2006 196 115
- JP-A- 2006 202 445
- JP-A- 2008 189 788
- US-A1- 2004 247 859
- WANG H Y ET AL: "Improvement in hard magnetic properties of FePt films by N addition", JOURNAL OF APPLIED PHYSICS, AMERICAN INSTITUTE OF PHYSICS. NEW YORK, US, vol. 95, no. 5, 1 March 2004 (2004-03-01), pages 2564-2568, XP012067521, ISSN: 0021-8979, DOI: 10.1063/1.1643785

## Description

### TECHNICAL FIELD

The present invention relates to Fe₁₆N₂ single phase particles having a large BHₘₐₓ which can be produced for a short period of time, and a process for producing the Fe₁₆N₂ single phase particles. Also, in the present invention, there is provided an anisotropic magnet or bonded magnet produced using the Fe₁₆N₂ single phase particles.

### BACKGROUND ART

At present, various magnetic materials such as Sr-based ferrite magnetic particles and Nd-Fe-B-based magnetic particles have been practically used. However, for the purpose of further enhancing properties of these materials, various improvements have been conducted, and in addition, various attempts have also been conducted to develop novel materials. Among the above materials, Fe-N-based compounds such as Fe₁₆N₂ have been noticed.

Among the Fe-N-based compounds, α"-Fe₁₆N₂ is known as a metastable compound crystallized when subjecting a martensite or ferrite in which nitrogen is incorporated in the form of a solid solution to annealing for a long period of time. The α"-Fe₁₆N₂ has a "bct" crystal structure, and therefore it is expected that the α"-Fe₁₆N₂ provides a giant magnetic substance having a large saturation magnetization. However, as recognized from the wording "metastable compound", there have been reported only very few cases where the compounds are successfully chemically synthesized in the form of isolated particles.

Hitherto, in order to obtain an α"-Fe₁₆N₂ single phase, various methods such as a deposition method, an MBE method (molecular beam epitaxy method), an ion implantation method, a sputtering method and an ammonia nitridation method have been attempted. However, production of more stabilized γ'-Fe₄N or ε'-Fe₂₋₃N is accompanied with an eutectic crystal of martensite (α'-Fe)-like metal or ferrite (α-Fe)-like metal, which tends to cause difficulty in producing the α"-Fe₁₆N₂ single phase compound in an isolated state. In some cases, it has been reported that the α"-Fe₁₆N₂ single phase compound is produced in the form of a thin film. However, the α"-Fe₁₆N₂ single phase compound in the form of such a thin film may be applied to magnetic materials only by a limited range, and tends to be unsuitable for use in still more extensive application fields.

The following known techniques concerning the α"-Fe₁₆N₂ have been proposed.

### PRIOR ART DOCUMENTS

### PATENT DOCUMENTS

Patent Document 1: Japanese Patent Application Laid-Open (KOKAI) No. 11-340023
Patent Document 2: Japanese Patent Application Laid-Open (KOKAI) No. 2000-277311
Patent Document 3: Japanese Patent Application Laid-Open (KOKAI) No. 2009-84115
Patent Document 4: Japanese Patent Application Laid-Open (KOKAI) No. 2008-108943
Patent Document 5: Japanese Patent Application Laid-Open (KOKAI) No. 2008-103510
Patent Document 6: Japanese Patent Application Laid-Open (KOKAI) No. 2007-335592
Patent Document 7: Japanese Patent Application Laid-Open (KOKAI) No. 2007-258427
Patent Document 8: Japanese Patent Application Laid-Open (KOKAI) No. 2007-134614
Patent Document 9: Japanese Patent Application Laid-Open (KOKAI) No. 2007-36027
Patent Document 10: Japanese Patent Application Laid-Open (KOKAI) No. 2006-319349

### NON-PATENT DOCUMENTS

Non-Patent Document 1: M. Takahashi, H. Shoji, H. Takahashi, H. Nashi, T. Wakiyama, M. Doi and M. Matsui, "J. Appl. Phys.", Vol. 76, pp. 6642-6647, 1994.
Non-Patent Document 2: Y. Takahashi, M. Katou, H. Shoji and M. Takahashi, "J. Magn. Magn. Mater.", Vol. 232, pp. 18-26, 2001.

### SUMMARY OF THE INVENTION

### PROBLEM TO BE SOLVED BY THE INVENTION

However, the techniques described in the above Patent Documents 1 to 10 and Non-Patent Documents 1 and 2 have still failed to improve properties of the magnetic materials to a sufficient extent.

That is, in Patent Document 1, it is described that iron particles on which a surface oxide film is present are subjected to reducing treatment and then to nitridation treatment to obtain Fe₁₆N₂. However, in the Patent Document 1, it is not taken into consideration to enhance a maximum energy product of the material. In addition, the nitridation treatment requires a prolonged time, thereby failing to provide an industrially suitable process.

Also, in Patent Document 2, it is described that iron oxide particles are subjected to reducing treatment to produce metallic iron particles, and the resulting metallic iron particles are subjected to nitridation treatment to obtain Fe₁₆N₂. However, in Patent Document 2, the iron particles are used as magnetic particles for magnetic recording media and therefore tend to be unsuitable as a hard magnetic material having a maximum energy product as high as not less than 5 MGOe as required for a magnet material.

Also, in Patent Documents 3 to 9, there are described maximum magnetic substances for magnetic recording media which can be used instead of ferrite. However, these magnetic substances are obtained in the form of not an α"-Fe₁₆N₂ single phase but a mixed phase of still stabler γ'-Fe₄N or ε'-Fe₂₋₃N, and martensite (α'-Fe)-like metal or ferrite (α-Fe)-like metal.

Also, in Patent Document 10, it is described that the α"-Fe₁₆N₂ single phase has been successfully produced. However, in Patent Document 10, the α"-Fe₁₆N₂ single phase is produced only under the limited conditions for a prolonged period of time, i.e., at a temperature of 110 to 120°C for 10 days. Therefore, the production method is not suitable for mass-production of the material. Further, the α"-Fe₁₆N₂ single phase obtained in Patent Document 10 has failed to exhibit a maximum energy product BHₘₐₓ as high as not less than 5 MGOe as required for a magnet material.

In Non-Patent Documents 1 and 2, there is such a scientifically interesting report that the α"-Fe₁₆N₂ single phase has been successfully produced in the form of a thin film. However, the α"-Fe₁₆N₂ single phase in the form of such a thin film is usable in only limited applications, and therefore unsuitable for use in more extensive applications. Further, the α"-Fe₁₆N₂ single phase has problems concerning productivity and economy when obtaining a generally used magnetic material therefrom. Document US 2004/247859 A1 discloses ferromagnetic particles comprising an Fel6 N2 single phase determined by X-Ray diffraction, having a σs of 80 to 160Am2/kg, a Hc of 79.6 to 318.4 kA/m and a BHmax value higher than 5MGOe (example 1 discloses a σs of 135.2 Am2/kg and a Hc of 226.9 kA/m). The particles can further comprise Si, Al or a rare-earth compound coated on the surface. The particles have a particle size between 5 and 80 nm with a ratio of a major axis to a minor axis being between 1 and 2. It also discloses a process for producing ferromagnetic particles, comprising the step of subjecting iron compound particles to a reducing treatment and then to a nitridation treatment, wherein the iron compound particles used as a starting material are in the form of iron oxide or iron oxyhydroxide which comprises primary particles having an average particle size of 5 to 80 nm and a ratio of a major axis to a minor axis being between 1 and 2.

In consequence, an object of the present invention is to provide Fe₁₆N₂ single phase particles having a BHₘₐₓ value as high as not less than 5 MGOe as required for a magnet material and a process for producing the particles, and an anisotropic magnet and a bonded magnet using the particles.

### MEANS FOR SOLVING THE PROBLEM

The above object can be achieved by the following aspects of the present invention.

That is, according to the present invention, there are provided ferromagnetic particles comprising an Fe₁₆N₂ single phase and having a BHₘₐₓ value of not less than 39.8 kJ/m³ (5 MGOe), a saturation magnetization value σₛ of not less than 130 A·m²/g (130 emu/g), a coercive force H_{c} of not less than 143.2 kA/m (1800 Oe) and a BET specific surface area of 80 to 250 m²/g.

Also, according to the present invention, there are provided ferromagnetic particles as described above, further comprising an Si compound and/or an Al compound with which a surface of the respective Fe₁₆N₂ particles is coated. Preferably, the Si compound and/or Al compound coated on the Fe₁₆N₂ particles is present in an amount of not more than 20000 ppm in terms of Si and/or Al.

Also, according to the present invention, there are provided ferromagnetic particles as described above, wherein the ferromagnetic particles comprise primary particles having an average minor axis diameter of 5 to 40 nm and an average major axis diameter of 30 to 250 nm.

In addition, according to the present invention, there is provided a process for producing the ferromagnetic particles of the invention, comprising the step of subjecting iron compound particles to reducing treatment and then to nitridation treatment, wherein the iron compound particles used as a starting material are in the form of iron oxide or iron oxyhydroxide which comprises primary particles having an average minor axis diameter of 5 to 40 nm and an average major axis diameter of 30 to 200 nm, and has a BET specific surface area of 85 to 230 m²/g, and wherein the temperature of the reducing treatment is 300 to 600°C.

Also, according to the present invention, there is provided the process for producing the ferromagnetic particles as described above, wherein a surface of the respective iron compound particles is coated with an Si compound and/or an Al compound, and then the resulting coated particles are subjected to the reducing treatment. Preferably, the iron compound particles are coated with a compound of a rare earth element in addition to the Si compound and/or Al compound.

Also, according to the present invention, there is provided the process for producing the ferromagnetic particles as described above, wherein a total treatment time of the reducing treatment and the nitridation treatment is not more than 36 hr. Preferably, the temperature of the nitridation treatment is 100 to 200°C.

Further, according to the present invention, there is provided an anisotropic magnet comprising the ferromagnetic particles of the invention.

Furthermore, according to the present invention, there is provided a bonded magnet comprising the ferromagnetic particles of the invention.

There is also provided the use of the ferromagnetic particles of the invention in an anisotropic magnet or bonded magnet.

### EFFECT OF THE INVENTION

The ferromagnetic particles according to the present invention have a large BHₘₐₓ value and therefore can be suitably used as a magnetic material.

Further, in the process for producing the ferromagnetic particles according to the present invention, the Fe₁₆N₂ particles having a large BHₘₐₓ value can be readily obtained, and therefore the production process is suitable as a process for producing ferromagnetic particles.

### PREFERRED EMBODIMENTS FOR CARRYING OUT THE INVENTION

The ferromagnetic particles according to the present invention comprise an Fe₁₆N₂ single phase. When the other crystal phases are present in the ferromagnetic particles, the resulting ferromagnetic particles may fail to exhibit sufficient magnetic properties.

The ferromagnetic particles according to the present invention have a maximum energy product BHₘₐₓ of not less than 39.8 kJ/^{m3} (5 MGOe). When the maximum energy product BHₘₐₓ of the ferromagnetic particles is less than 39.8kJ/m³ (5 MGOe), the ferromagnetic particles may fail to exhibit sufficient magnetic properties required for hard magnetic materials such as magnet materials. The maximum energy product BHₘₐₓ of the ferromagnetic particles is preferably not less than 47.7 kJ/m³ (6.0 MGOe), and more preferably 51.7 kJ/m³ (6.5 MGOe).

The ferromagnetic particles according to the present invention have a saturation magnetization value σₛ of not less than 130 A·m²/kg (130 emu/g). The particles of the invention have a coercive force H_{c} of not less than 143.2 kA/m (1800 Oe). When the magnetization value σₛ and the coercive force H_{c} of the ferromagnetic particles are respectively out of the above-specified ranges, the resulting ferromagnetic particles may fail to exhibit sufficient magnetic properties required for hard magnetic materials such as magnet materials. The magnetization value σₛ of the ferromagnetic particles is preferably not less than 135 A·m²/kg (135 emu/g), and the coercive force H_{c} of the ferromagnetic particles is preferably not less than 159.2 kA/m (2000 Oe) and more preferably not less than 175.1 kA/m (2200 Oe).

The primary particles of the ferromagnetic particles according to the present invention preferably have an average minor axis diameter of 5 to 40 nm and an average major axis diameter of 5 to 250 nm. When the average minor axis diameter and the average major axis diameter of the primary particles are respectively out of the above-specified ranges, it may be difficult to obtain the Fe₁₆N₂ single phase particles. The primary particles of the ferromagnetic particles preferably have an average minor axis diameter of 7 to 38 nm and an average major axis diameter of 7 to 220 nm, and more preferably an average minor axis diameter of 8 to 35 nm and an average major axis diameter of 8 to 200 nm.

The ferromagnetic particles according to the present invention have a specific surface area of 80 to 250 m²/g. When the specific surface area of the ferromagnetic particles is less than 80 m²/g, the nitridation of the particles tends to hardly proceed, so that it may be difficult to obtain Fe₁₆N₂ particles in the form of a single phase. When the specific surface area of the ferromagnetic particles is more than 250 m²/g, the nitridation of the particles tends to be caused excessively, so that it may also be difficult to obtain Fe₁₆N₂ particles in the form of a single phase. The specific surface area of the ferromagnetic particles is more preferably 82 to 245 m²/g, and still more preferably 85 to 240 m²/g.

In the present invention, the respective ferromagnetic particles may be coated with an Si compound and/or an Al compound. When being coated with the Si compound and/or the Al compound, the temperatures used upon the heat treatments (including the reducing treatment and nitridation treatment) can be lowered, so that the particles can be prevented from suffering from excessive local nitridation. When being coated with the Si compound and/or the Al compound, it is preferred that the Si compound and/or the Al compound be respectively present in an amount of not more than 20000 ppm in terms of Si and/or Al. When the coating amounts of the Si compound and/or the Al compound are respectively more than 20000 ppm, the non-magnetic components in the particles tend to be undesirably increased. The coating amounts of the Si compound and/or the Al compound are respectively more preferably 1000 to 15000 ppm and still more preferably 1500 to 13000 ppm.

Next, the process for producing the ferromagnetic particles according to the present invention is described.

The ferromagnetic particles according to the present invention may be obtained by subjecting iron compound particles to reducing treatment and then to nitridation treatment, if required, after coating the surface of the respective iron compound particles with an Si compound and/or an Al compound.

The shape of iron oxide particles or iron oxyhydroxide particles as a starting material is not particularly limited, and may be of any shape such as an acicular shape, a granular shape, a spindle shape, a plate shape, a spherical shape, a cubic shape and a rectangular shape.

As the iron compound particles as the starting material, there may be used iron oxide or iron oxyhydroxide. Examples of the iron oxide or iron oxyhydroxide include magnetite, γ-Fe₂O₃, α-Fe₂O₃, α-FeOOH, β-FeOOH and γ-FeOOH, although not particularly limited thereto. The starting material may be in the form of a single phase, or may comprise impurities. As the impurities, the starting material may comprise iron oxide or iron oxyhydroxide other than those in a main phase thereof.

The primary particles of the iron compound particles as the starting material have an average minor axis diameter of 5 to 40 nm and an average major axis diameter of 5 to 200 nm. When the average minor axis diameter of the primary particles is less than 5 nm and/or when the average major axis diameter of the primary particles is less than 5 nm, the nitridation tends to excessively proceed, thereby failing to obtain Fe₁₆N₂ in the form of a single phase. When the average minor axis diameter of the primary particles is more than 40 nm and/or when the average major axis diameter of the primary particles is more than 200 nm, the nitridation tends to hardly proceed, thereby failing to obtain Fe₁₆N₂ in the form of a single phase. The primary particles of the iron compound particles preferably have an average minor axis diameter of 7 to 38 nm and an average major axis diameter of 7 to 190 nm, and more preferably an average minor axis diameter of 8 to 35 nm and an average major axis diameter of 8 to 185 nm.

The specific surface area of the iron oxide or iron oxyhydroxide used as the iron compound particles as the starting material is 85 to 230 m²/g. When the specific surface area of the iron oxide or iron oxyhydroxide is less than 85 m²/g, the nitridation tends to hardly proceed, thereby failing to obtain Fe₁₆N₂ in the form of a single phase. When the specific surface area of the iron oxide or iron oxyhydroxide is more than 230 m²/g, the nitridation tends to excessively proceed, thereby failing to obtain Fe₁₆N₂ in the form of a single phase. The specific surface area of the iron oxide or iron oxyhydroxide is preferably 90 to 220 m²/g and more preferably 95 to 210 m²/g.

The contents of impurity elements such as Al, Mn and Si in the iron compound particles as the starting material are preferably as small as possible. When these different kinds of elements are present in a large amount in the iron compound particles, the resulting ferromagnetic particles may fail to exhibit suitable magnetic properties required for hard magnetic materials. The contents of the impurity elements are preferably less than 3% by weight.

In the present invention, the surface of the respective iron compound particles may be coated with an Si compound and/or an Al compound, if required.

The coating of the respective iron compound particles with the Si compound and/or the Al compound may be conducted as follows. That is, after adjusting a pH value of a water suspension prepared by suspending the iron compound particles in water, the Si compound and/or the Al compound are added to the water suspension and mixed and stirred therewith, if required, followed by further adjusting the pH value of the mixture obtained after the mixing and stirring, thereby coating the surface of the respective iron compound particles with the Si compound and/or the Al compound. Next, the thus obtained coated particles are subjected to filtration, washing with water, drying and pulverization.

Examples of the Si compound usable in the present invention include water glass #3, sodium orthosilicate, sodium metasilicate and colloidal silica.

Examples of the Al compound usable in the present invention include aluminum salts such as aluminum acetate, aluminum sulfate, aluminum chloride and aluminum nitrate, aluminic acid alkali salts such as sodium aluminate, and alumina sol.

The amounts of the Si compound and/or the Al compound added are respectively preferably 1000 to 20000 ppm in terms of Si or in terms of Al based on the iron compound particles. When the amounts of the Si compound and/or the Al compound added are respectively less than 1000 ppm, it may be difficult to attain a sufficient effect of suppressing sintering between the particles upon the heat treatments. When the amounts of the Si compound and/or the Al compound added are respectively more than 20000 ppm, the content of non-magnetic components in the resulting particles tends to be undesirably increased.

The iron oxide or iron oxyhydroxide used as the starting material in the present invention is preferably coated with at least alumina or silica. More specifically, the surface of respective goethite particles is coated in order to suppress occurrence of sintering between the particles upon the heat treatment for obtaining metallic iron as a raw material used before subjected to the nitridation treatment from the goethite. The surface coating amount of the alumina or silica is not particularly limited, and is preferably 1000 to 20000 ppm, more preferably 1500 to 15000 ppm and still more preferably 1500 to 13000 ppm in terms of Si or Al metal element.

The specific surface area of the iron oxide or iron oxyhydroxide coated with the Si compound and/or the Al compound is preferably 90 to 250 m²/g. When the specific surface area of the iron oxide or iron oxyhydroxide coated is less than 90 m²/g, the nitridation tends to hardly proceed, thereby failing to obtain Fe₁₆N₂ in the form of a single phase. When the specific surface area of the iron oxide or iron oxyhydroxide coated is more than 250 m²/g, the nitridation tends to excessively proceed, thereby failing to obtain Fe₁₆N₂ in the form of a single phase. The specific surface area of the iron oxide or iron oxyhydroxide coated with the Si compound and/or the Al compound is more preferably 92 to 240 m²/g, and still more preferably 95 to 240 m²/g.

In the present invention, the iron oxide or iron oxyhydroxide may be coated with a compound of a rare earth element such as Y and La in addition to the above Si compound and Al compound.

Next, the iron compound particles, or the iron compound particles whose surface is coated with the Si compound and/or the Al compound, are subjected to reducing treatment.

The temperature of the reducing treatment is 300 to 600°C. When the temperature of the reducing treatment is less than 300°C, the iron compound particles may fail to be reduced into metallic iron to a sufficient extent. When the temperature of the reducing treatment is more than 600°C, although the iron compound particles can be sufficiently reduced into metallic iron, the sintering between the particles also tends to undesirably proceed. The temperature of the reducing treatment is preferably 350 to 500°C.

The atmosphere upon the reducing treatment is preferably a hydrogen atmosphere.

After conducting the reducing treatment, the nitridation treatment is carried out.

The temperature of the nitridation treatment is 100 to 200°C. When the temperature of the nitridation treatment is less than 100°C, the nitridation treatment tends to hardly proceed to a sufficient extent. When the temperature of the nitridation treatment is more than 200°C, γ'-Fe₄N or ε'-Fe₂₋₃N tends to be undesirably produced, thereby failing to produce Fe₁₆N₂ in the form of a single phase. The temperature of the nitridation treatment is preferably 110 to 180°C.

The atmosphere upon the nitridation treatment is preferably an N₂ atmosphere and may be mixed with NH₃, H₂, etc., in addition to N₂.

The ferromagnetic particles according to the present invention can be obtained through the heat treatments for not more than 36 hr (total treatment time of the reducing treatment and the nitridation treatment). Upon industrially producing the Fe₁₆N₂ particles in the form of a single phase, it is preferred to form the single phase for a time period as short as possible to increase a yield of the ferromagnetic particles per unit time, thereby attaining an excellent industrial productivity. The total treatment time of the reducing treatment and the nitridation treatment is preferably not more than 33 hr and more preferably not more than 30 hr.

In the present invention, the properties of the iron oxide or iron oxyhydroxide as the starting material are well controlled, and the conditions of the above reducing treatment and nitridation treatment are appropriately selected, to obtain the ferromagnetic particles as aimed by the present invention.

Next, the anisotropic magnet according to the present invention is described.

The magnetic particles of the ferromagnetic magnet according to the present invention may be controlled so as to attain desired magnetic properties (such as a coercive force, a residual magnetic flux density and a maximum energy product) according to the purposes and applications as aimed.

The magnetic orientation method of the magnet is not particularly limited. For example, the Fe₁₆N₂ single phase particles are mixed and kneaded together with a dispersant in an EVA resin (ethylene-vinyl acetate resin) at a temperature not lower than a glass transition temperature thereof and molded, and an external magnetic field is applied to the resulting molded product at a temperature nearly exceeding the glass transition temperature to accelerate a magnetic orientation of the molded product. Alternatively, a resin such as urethane resins, an organic solvent and the Fe₁₆N₂ single phase particles may be strongly mixed with each other using a paint shaker, etc., and pulverized to prepare an ink, and the resulting ink may be applied and printed on a resin film with a blade or by a roll-to-roll method, and rapidly passed through a magnetic field to magnetically orient the resulting coated film.

Next, the resin composition for bonded magnet according to the present invention is described.

The resin composition for bonded magnet according to the present invention may be prepared by dispersing the ferromagnetic particles according to the present invention in a binder resin. The resin composition for bonded magnet comprises 85 to 99% by weight of the ferromagnetic particles, and the balance comprising the binder resin.

The binder resin used in the resin composition for bonded magnet may be selected from various resins depending upon the molding method used. In the case of an injection molding method, an extrusion molding method and a calender molding method, thermoplastic resins may be used as the binder resin. In the case of a compression molding method, thermosetting resins may be used as the binder resin. Examples of the thermoplastic resins include nylon (PA)-based resins, polypropylene (PP)-based resins, ethylene-vinyl acetate (EVA)-based resins, polyphenylene sulfide (PPS)-based resins, liquid crystal (LCP)-based resins, elastomer-based resins and rubber-based resins. Examples of the thermosetting resins include epoxy-based resins and phenol-based resins.

Meanwhile, upon production of the resin composition for bonded magnet, in order to facilitate the molding procedure and attain sufficient magnetic properties, in addition to the binder resin, there may also be used various known additives such as a plasticizer, a lubricant and a coupling agent, if required. Further, various kinds of magnet particles such as ferrite magnet particles may also be mixed in the resin composition.

These additives may be adequately selected according to the aimed applications. As the plasticizer, commercially available products may be appropriately used according to the resins used. The total amount of the plasticizers added is about 0.01 to about 5.0% by weight based on the weight of the binder resin.

Examples of the lubricant usable in the present invention include stearic acid and derivatives thereof, inorganic lubricants, oil-based lubricants. The lubricant may be used in an amount of about 0.01 to about 1.0% by weight based on a whole weight of the bonded magnet.

As the coupling agent, commercially available products may be used according to the resins and fillers used. The coupling agent may be used in an amount of about 0.01 to about 3.0% by weight based on the weight of the binder resin used.

The resin composition for bonded magnet according to the present invention may be produced by mixing and kneading the ferromagnetic particles with the binder resin.

The mixing of the ferromagnetic particles with the binder resin may be carried out using a mixing device such as a Henschel mixer, a V-shaped mixer and a Nauta mixer, whereas the kneading may be carried out using a single-screw kneader, a twin-screw kneader, a mill-type kneader, an extrusion kneader or the like.

Next, the bonded magnet according to the present invention is described.

The magnetic properties of the bonded magnet may be controlled so as to attain desired magnetic properties (such as a coercive force, a residual magnetic flux density and a maximum energy product) according to the aimed applications.

The bonded magnet according to the present invention may be produced by subjecting the above resin composition for bonded magnet to molding process by a known molding method such as an injection molding method, an extrusion molding method, a compression molding method or a calender molding method, and then subjecting the resulting molded product to electromagnet magnetization or pulse magnetization by an ordinary method to form a bonded magnet.

### <Function>

The ferromagnetic particles according to the present invention are in the form of Fe₁₆N₂ single phase particles without inclusion of any other phases and therefore can exhibit a large BHₘₐₓ value.

### EXAMPLES

Next, the present invention is described in more detail by the following Examples. However, these Examples are only illustrative and not intended to limit the present invention thereto. The evaluation methods used in Examples, etc., are as follows.

The specific surface area of the iron oxide or iron oxyhydroxide as the starting material or the obtained Fe₁₆N₂ particles was measured by a B.E.T. method using nitrogen.

The particle size of primary particles of the iron oxide or iron oxyhydroxide as the starting material or the obtained Fe₁₆N₂ particles was measured using a transmission electron microscope "JEM-1200EXII" manufactured by Nippon Denshi Co., Ltd. In this case, particle sizes of 120 particles randomly selected were measured to obtain an average value thereof.

The compositions of the iron oxide or iron oxyhydroxide as the starting material, the obtained Fe₁₆N₂ particles, and the coating material used for forming a surface coating layer on these particles, were determined by analyzing a solution prepared by dissolving the sample in an acid under heating using a plasma emission spectroscopic apparatus "SPS4000" manufactured by Seiko Denshi Kogyo Co., Ltd.

The constituting phase of the iron oxide or iron oxyhydroxide as the starting material or the obtained Fe₁₆N₂ particles was determined by the identification carried out using a powder X-ray diffractometer (XRD) "RINT-2500" manufactured by Rigaku Co., Ltd., and by the electron beam diffraction (ED) evaluation carried out using a transmission electron microscope "JEM-1200EXII" manufactured by Nippon Denshi Co., Ltd. In the ED evaluation, it was possible to determine whether or not impurity phases such as α-Fe and Fe₄N are present in a micro state, by using the difference in lattice constant therebetween.

The magnetic properties of the obtained Fe₁₆N₂ particles were measured at room temperature (300 K) in a magnetic field of 0 to 7 T using a physical property measurement system (PPMS) manufactured by Quantum Design Japan Co., Ltd.

### Example 1:

### <Preparation of starting material>

Goethite particles having a minor axis diameter of 17 nm, a major axis diameter of 110 nm and a specific surface area of 123 m²/g were produced from ferric chloride, sodium hydroxide and sodium carbonate. The resulting goethite particles were separated by filtration using a nutshe, and repulped using a disper so as to prepare a slurry having a concentration of 3 g/L in pure water. The resulting slurry was held at a pH value of 6.5 using a dilute nitric acid solution, and a water glass solution comprising SiO₂ in an amount of 5% by weight was dropped thereto at 40°C over 2 hr such that Si content in the SiO₂-coated goethite particles was 5000 ppm. The resulting particles were separated again by filtration using a nutsche, and washed with pure water such that the pure water was used in an amount of 150 mL per 5 g of the sample. Successively, the obtained particles were dried at 60°C using a vacuum dryer, and only aggregated particles having a particle size of not more than 10 *µ*m were extracted using an atomizer mill and a vibration sieve. The Si content in the thus obtained sample was 4800 ppm.

### <Reducing treatment and nitridation treatment of starting material>

The above obtained sample particles in an amount of 50 g were charged in an alumina sagger (125 mm x 125 mm x 30 mm in depth), and allowed to stand in a heat treatment furnace. An inside of the furnace was evacuated and then filled with an argon gas, and further evaluated gain. This procedure was repeated three times. Thereafter, while flowing a hydrogen gas at a flow rate of 5 L/min, the sample particles were heated to 400°C at a temperature rise rate of 5°C/min and held at that temperature for 4 hr to subject the particles to reducing treatment. Thereafter, the particles were cooled to 140°C at which supply of the hydrogen gas was stopped. Successively, while flowing an ammonia gas at a flow rate of 10 L/min, the particles were subjected to nitridation treatment at 140°C for 20 hr. Thereafter, while flowing an argon gas, the particles were cooled to room temperature at which supply of the argon gas was stopped, and the inside atmosphere was replaced with air over 3 hr.

### <Analysis and evaluation of resulting sample particles>

As a result of subjecting the resulting sample particles to XRD and ED analysis, it was confirmed that the sample particles exhibited an Fe₁₆N₂ single phase, and primary particles thereof had a minor axis diameter of 22 nm, a major axis diameter of 98 nm and a specific surface area of 132 m²/g. As a result of measurement of magnetic properties of the sample particles, it was confirmed that the sample particles had a saturation magnetization value σₛ of 147A·m²/kg (147 emu/g), a coercive force H_{c} of 215.7 kA/m (2710 Oe) and BHₘₐₓ of 58.9 kJ/m³ (7.4 MGOe).

### Example 2:

Goethite particles having a minor axis diameter of 15 nm, a major axis diameter of 30 nm and a specific surface area of 197 m²/g were produced from ferric chloride, sodium hydroxide and sodium carbonate by the same method as defined in Example 1. The resulting goethite particles were separated by filtration using a nutshe, and repulped using a disper so as to prepare a slurry having a concentration of 5 g/L in pure water. The resulting slurry was held at a pH value of 7.0 using a dilute nitric acid solution, and a water glass solution comprising SiO₂ in an amount of 5% by weight was dropped thereto at 40°C over 5 hr such that the Si content in the SiO₂-coated goethite particles was 10000 ppm. The resulting particles were separated again by filtration using a nutsche, and washed with pure water such that the pure water was used in an amount of 200 mL per 5 g of the sample. Successively, the obtained particles were dried at 55°C using a vacuum dryer, and only aggregated particles having a particle size of not more than 10 *µ*m were extracted using an atomizer mill and a vibrating sieve. The Si content in the thus obtained sample was 9800 ppm.

Next, the above obtained sample particles were subjected to reducing treatment and then to nitridation treatment by the same method as defined in Example 1 except that the gas used upon the nitridation treatment was replaced with a mixed gas comprising an ammonia gas, a nitrogen gas and a hydrogen gas at a mixing ratio of 7:2.8:0.2, and the nitridation treatment was carried out at 140°C for 17 hr while flowing the mixed gas at a flow rate of 8 L/min in total.

As a result of subjecting the resulting sample particles to XRD and ED analysis, it was confirmed that the sample particles exhibited an Fe₁₆N₂ single phase, and primary particles thereof had a minor axis diameter of 19 nm, a major axis diameter of 28 nm and a specific surface area of 201 m²/g. As a result of measurement of magnetic properties of the sample particles, it was confirmed that the sample particles had a saturation magnetization value σₛ of 159A·m²/kg (159 emu/g), a coercive force H_{c} of 211.5 kA/m (2658 Oe) and BHₘₐₓ of 55.7 kJ/m³ (7.0 MGOe).

### Example 3:

The sample was obtained by the same method as defined in Example 2 except that the surface of the respective goethite particles was first coated with yttria in an amount of 700 ppm in terms of Y element and then coated with alumina in an amount of 3000 ppm in terms of aluminum element. The reducing treatment was carried out by the same method as defined in Example 1. In addition, the nitridation treatment was carried out at 142°C for 15 hr while flowing an ammonia gas at a flow rate of 5 L/min. As a result, it was confirmed that the obtained sample has a Y content of 689 ppm and an Al content of 2950 ppm.

As a result of subjecting the resulting particles to XRD and ED analysis, it was confirmed that the particles exhibited an Fe₁₆N₂ single phase, and primary particles thereof had a minor axis diameter of 18 nm, a major axis diameter of 30 nm and a specific surface area of 205 m²/g. As a result of measurement of magnetic properties of the obtained particles, it was confirmed that the particles had a saturation magnetization value σₛ of 151A·m²/kg (151 emu/g), a coercive force H_{c} of 213.9kAA/m(2688 Oe) and BHₘₐₓ of 56.5kJ/m³ (7.1 MGOe).

### Example 4:

Ferrous nitrate and ferric nitrate were weighed such that an Fe ratio therebetween was 0.97:2 and dissolved to prepare a solution, and magnetite having a major axis diameter of 13 nm, a minor axis diameter of 13 nm and a specific surface area of 156 m²/g was produced from the resulting solution and sodium hydroxide. The thus obtained magnetite particles were coated with silica in an amount of 4000 ppm in terms of Si by the same method as defined in Example 1. As a result of analyzing the resulting particles, it was confirmed that the Si content in the magnetite was 3780 ppm. As a result of subjecting the magnetite to XRD analysis, it was confirmed that the magnetite comprised a trace amount of α-Fe₂O₃ as an impurity. The thus obtained magnetite particles were subjected to washing, drying, pulverization and sieving by the same method as defined in Example 1, and thereafter subjected to reducing treatment and then to nitridation treatment by the same method as defined in Example 2.

As a result of subjecting the resulting particles to XRD and ED analysis, it was confirmed that the particles exhibited an Fe₁₆N₂ single phase, and primary particles thereof had a minor axis diameter of 14 nm, a major axis diameter of 14 nm and a specific surface area of 173 m²/g. As a result of measurement of magnetic properties of the obtained particles, it was confirmed that the particles had a saturation magnetization value σₛ of 145A·m²/kg (145 emu/g), a coercive force H_{c} of 179.7 kA/m (2258 Oe) and 50.1 kJ/m³ (BHₘₐₓ of 6.3 MGOe).

### Example 5:

Goethite particles having a minor axis diameter of 17 nm, a major axis diameter of 110 nm and a specific surface area of 123 m²/g were produced by the same method as defined in Example 1. The resulting goethite particles were heat-treated in air at 300°C for 1h to obtain hematite particles. Successively, the thus obtained hematite particles were subjected to reducing treatment at 295°C for 4 hr in a flow of 100% hydrogen gas, and then cooled in the furnace to 100°C while flowing hydrogen therethrough. The flowing gas was changed from the hydrogen gas to a 100% ammonia gas, and the ammonia gas was flowed at a rate of 4 L/min. The resulting particles were heated to 150°C at a temperature rise rate of 5°C/min and subjected to nitridation treatment at 150°C for 10 hr.

As a result of subjecting the resulting particles to XRD and ED analysis, it was confirmed that the particles exhibited an Fe₁₆N₂ single phase, and primary particles thereof had a minor axis diameter of 32 nm, a major axis diameter of 53 nm and a specific surface area of 86 m²/g. As a result of measurement of magnetic properties of the particles, it was confirmed that the particles had a saturation magnetization value σₛ of 166 A·m²/kg (166 emu/g), a coercive force H_{c} of 154.4 kA/m (1940 Oe) and BHₘₐₓ of 72.4 kJ/m³ (9.1 MGOe).

### Reference Example 1:

The silica-coated goethite particles obtained by the same method as defined in Example 1 were subjected to reducing treatment at 650°C for 20 hr, and then to nitridation treatment at 160°C for 12 hr while flowing an ammonia gas therethrough at a rate of 4 L/min.

As a result of subjecting the resulting particles to XRD and ED analysis, it was confirmed that the particles exhibited a mixed phase of α-Fe, Fe₁₆N₂, Fe₃N and Fe₄N, and primary particles thereof had a minor axis diameter of 34 nm, a major axis diameter of 85 nm and a specific surface area of 105 m²/g. As a result of measurement of magnetic properties of the particles, it was confirmed that the particles had a saturation magnetization value σₛ of 136 A·m²/kg (136 emu/g), a coercive force H_{c} of 98.3 kA/m (1235 Oe) and BHₘₐₓ of 27.1 kJ/m³ (3.4 MGOe).

### Comparative Example 1:

Goethite particles having a minor axis diameter of 24 nm, a major axis diameter of 240 nm and a specific surface area of 88 m²/g were produced from ferric chloride and sodium hydroxide. The resulting goethite particles were coated with silica in an amount of 4000 ppm in terms of Si by the same method as defined in Example 1. As a result of analyzing the resulting particles, it was confirmed that the Si content therein was 3530 ppm. Next, the obtained particles were successively subjected to washing, drying, pulverization and sieving by the same method as defined in Example 1, and thereafter subjected to reducing treatment and then to nitridation treatment. The nitridation treatment was carried out at 160°C for 24 hr while flowing a mixed gas comprising an ammonia gas, a nitrogen gas and a hydrogen gas at a mixing ratio of 7:0.3:2.7 at flow rate of 8 L/min in total.

As a result of subjecting the resulting particles to XRD and ED analysis, it was confirmed that the particles exhibited a mixed phase of α-Fe, Fe₁₆N₂, Fe₃N and Fe₄N, and primary particles thereof had a minor axis diameter of 30 nm, a major axis diameter of 207 nm and a specific surface area of 99 m²/g. As a result of measurement of magnetic properties of the particles, it was confirmed that the particles had a saturation magnetization value σₛ of 108 A·m²/kg (108 emu/g), a coercive force H_{c} of 138.9 kA/m (1745 Oe) and BHₘₐₓ of 23.1 kJ/m³ (2.9 MGOe).

### Comparative Example 2:

Goethite particles having a minor axis diameter of 35 nm, a major axis diameter of 157 nm and a specific surface area of 78 m²/g were produced from ferric chloride and sodium hydroxide. The resulting goethite particles were coated with silica in an amount of 9000 ppm in terms of Si by the same method as defined in Example 1. As a result of analyzing the resulting particles, it was confirmed that the Si content therein was 8600 ppm. Next, the obtained particles were successively subjected to washing, drying, pulverization and sieving by the same method as defined in Example 1, and thereafter subjected to reducing treatment and then to nitridation treatment by the same method as defined in Example 1.

As a result of subjecting the resulting particles to XRD and ED analysis, it was confirmed that the particles exhibited a mixed phase of α-Fe, Fe₁₆N₂, Fe₃N and Fe₄N, and primary particles thereof had a minor axis diameter of 43 nm, a major axis diameter of 126 nm and a specific surface area of 97 m²/g. As a result of measurement of magnetic properties of the particles, it was confirmed that the particles had a saturation magnetization value σₛ of 106 A·m²/kg (106 emu/g), a coercive force H_{c} of 108.9 kA/m (1368 Oe) and BHₘₐₓ of 16.7 kJ/m³ (2.1 MGOe).

### INDUSTRIAL APPLICABILITY

In the process for producing the ferromagnetic particles according to the present invention, it is possible to readily produce the Fe₁₆N₂ particles having a large BHₘₐₓ value. Therefore, the production process of the present invention is suitable as the process for producing ferromagnetic particles.

## Claims

1. Ferromagnetic particles comprising an Fe₁₆N₂ single phase and having a BHₘₐₓ value of not less than 39.8 kJ/m³ (5 MGOe), a saturation magnetization value σₛ of not less than 130 A·m²/kg (130 emu/g), a coercive force H_{c} of not less than 143.2 kA/m (1800 Oe) and a BET specific surface area of 80 to 250 m²/g.

2. Ferromagnetic particles according to claim 1, further comprising an Si compound and/or an Al compound with which a surface of the respective Fe₁₆N₂ particles is coated.

3. Ferromagnetic particles according to claim 2 wherein the Si compound and/or Al compound coated on the Fe₁₆N₂ particles is present in an amount of not more than 20000 ppm in terms of Si and/or Al.

4. Ferromagnetic particles according to any one of claims 1 to 3, wherein the ferromagnetic particles comprise primary particles having an average minor axis diameter of 5 to 40 nm and an average major axis diameter of 30 to 250 nm.

5. A process for producing the ferromagnetic particles as defined in any one of claims 1 to 4, comprising the step of subjecting iron compound particles to reducing treatment and then to nitridation treatment, wherein the iron compound particles used as a starting material are in the form of iron oxide or iron oxyhydroxide which comprises primary particles having an average minor axis diameter of 5 to 40 nm and an average major axis diameter of 30 to 200 nm, and has a BET specific surface area of 85 to 230 m²/g, and wherein the temperature of the reducing treatment is 300 to 600°C.

6. A process for producing the ferromagnetic particles according to claim 5, wherein a surface of the respective iron compound particles is coated with an Si compound and/or an Al compound, and then the resulting coated particles are subjected to the reducing treatment.

7. A process for producing the ferromagnetic particles according to claim 6, wherein the iron compound particles are coated with a compound of a rare earth element in addition to the Si compound and/or Al compound.

8. A process for producing the ferromagnetic particles according to any one of claims 5 to 7, wherein a total treatment time of the reducing treatment and the nitridation treatment is not more than 36 hr.

9. A process for producing the ferromagnetic particles according to any of claims 5 to 8 wherein the temperature of the nitridation treatment is 100 to 200°C.

10. An anisotropic magnet comprising the ferromagnetic particles as defined in any one of claims 1 to 4.

11. A bonded magnet comprising the ferromagnetic particles as defined in any one of claims 1 to 4.

12. Use of the ferromagnetic particles according to any one of claims 1 to 4 in an anisotropic magnet or bonded magnet.

## Patentansprüche

1. Ferromagnetische Teilchen, umfassend eine Fe₁₆N₂-Einzelphase und mit einem BHₘₐₓ-Wert von nicht weniger als 39,8 kJ/m³ (5 MGOe), einem Sättigungsmagnetisierungswert σₛ von nicht weniger als 130 A·m²/kg (130 emu/g), einer Koerzitivkraft H_{c} von nicht weniger als 143,2 kA/m (1800 Oe) und einem BET-spezifischen Oberflächenbereich von 80 bis 250 m²/g.

2. Ferromagnetische Teilchen nach Anspruch 1, ferner umfassend eine Si-Verbindung und/oder eine Al-Verbindung, mit der eine Oberfläche der jeweiligen Fe₁₆N₂-Teilchen beschichtet ist.

3. Ferromagnetische Teilchen nach Anspruch 2, wobei die auf die Fe₁₆N₂-Teilchen beschichtete Si-Verbindung und/oder Al-Verbindung in einer Menge von nicht mehr als 20.000 ppm in Bezug auf Si und/oder Al vorhanden ist.

4. Ferromagnetische Teilchen nach einem der Ansprüche 1 bis 3, wobei die ferromagnetischen Teilchen primäre Teilchen mit einem durchschnittlichen Nebenachsendurchmesser von 5 bis 40 nm und einem durchschnittlichen Hauptachsendurchmesser von 30 bis 250 nm umfassen.

5. Verfahren zum Herstellen der ferromagnetischen Teilchen nach einem der Ansprüche 1 bis 4, umfassend den Schritt eines Unterziehens von Teilchen aus Eisenverbindung einer Reduktionsbehandlung und dann einer Nitrierbehandlung, wobei die Teilchen aus Eisenverbindung, die als ein Anfangsmaterial verwendet werden, in der Form von Eisenoxid oder Eisenoxyhydroxid sind, das primäre Teilchen mit einem durchschnittlichen Nebenachsendurchmesser von 5 bis 40 nm und einem durchschnittlichen Hauptachsendurchmesser von 30 bis 200 nm umfasst und einen BET-spezifischen Oberflächenbereich von 85 bis 230 m²/g aufweist, und wobei die Temperatur der Reduktionsbehandlung 300 bis 600 °C beträgt.

6. Verfahren zum Herstellen der ferromagnetischen Teilchen nach Anspruch 5, wobei eine Oberfläche der jeweiligen Teilchen aus Eisenverbindung mit einer Si-Verbindung und/oder einer Al-Verbindung beschichtet wird und die erhaltenen beschichteten Teilchen dann der Reduktionsbehandlung unterzogen werden.

7. Verfahren zum Herstellen der ferromagnetischen Teilchen nach Anspruch 6, wobei die Teilchen aus Eisenverbindung zusätzlich zu der Si-Verbindung und/oder Al-Verbindung mit einer Verbindung eines Seltenerdelements beschichtet sind.

8. Verfahren zum Herstellen der ferromagnetischen Teilchen nach einem der Ansprüche 5 bis 7, wobei eine Gesamtbehandlungszeit der Reduktionsbehandlung und der Nitrierbehandlung nicht mehr als 36 Std. beträgt.

9. Verfahren zum Herstellen der ferromagnetischen Teilchen nach einem der Ansprüche 5 bis 8, wobei die Temperatur der Nitrierbehandlung 100 bis 200 °C beträgt.

10. Anisotroper Magnet, umfassend die ferromagnetischen Teilchen nach einem der Ansprüche 1 bis 4.

11. Verbundmagnet, umfassend die ferromagnetischen Teilchen nach einem der Ansprüche 1 bis 4.

12. Verwendung der ferromagnetischen Teilchen nach einem der Ansprüche 1 bis 4 in einem anisotropen Magneten oder Verbundmagneten.

## Revendications

1. Particules ferromagnétiques comprenant une phase unique de Fe₁₆N₂ et présentant une valeur de BHₘₐₓ de pas moins de 39,8 kJ/m³ (5 MGOe), une valeur d'aimantation à saturation σₛ de pas moins de 130 A·m²/kg (130 emu/g), une force coercitive H_{c} de pas moins de 143,2 kA/m (1800 Oe) et une superficie spécifique BET de 80 à 250 m²/g.

2. Particules ferromagnétiques selon la revendication 1, comprenant en outre un composé de Si et/ou un composé d'Al avec lequel/lesquels une surface des particules Fe₁₆N₂ respectives est recouverte.

3. Particules ferromagnétiques selon la revendication 2, dans lesquelles le composé de Si et/ou le composé d'Al recouvrant les particules Fe₁₆N₂ est/sont présent(s) dans une quantité de pas plus de 20 000 ppm en termes de Si et/ou Al.

4. Particules ferromagnétiques selon l'une quelconque des revendications 1 à 3, les particules ferromagnétiques comprenant des particules primaires présentant un diamètre d'axe mineur moyen de 5 à 40 nm et un diamètre d'axe majeur moyen de 30 à 250 nm.

5. Procédé de production des particules ferromagnétiques telles que définies dans l'une quelconque des revendications 1 à 4, comprenant l'étape de soumission de particules de composé de fer à un traitement de réduction et puis à un traitement de nitruration, les particules de composé de fer utilisées en tant que matériau de départ étant sous forme d'oxyde de fer ou d'oxyhydroxyde de fer qui comprend des particules primaires présentant un diamètre d'axe mineur moyen de 5 à 40 nm et un diamètre d'axe majeur moyen de 30 à 200 nm, et présentant une superficie spécifique BET de 85 à 230 m²/g et la température du traitement de réduction étant de 300 à 600 °C.

6. Procédé de production des particules ferromagnétiques selon la revendication 5, dans lequel une surface des particules de composé de fer respectives est recouverte d'un composé de Si et/ou d'un composé d'Al, et puis les particules recouvertes obtenues sont soumises au traitement de réduction.

7. Procédé de production des particules ferromagnétiques selon la revendication 6, dans lequel les particules de composé de fer sont recouvertes d'un composé d'un élément de terres rares en plus du composé de Si et/ou du composé d'Al.

8. Procédé de production des particules ferromagnétiques selon l'une quelconque des revendications 5 à 7, dans lequel un temps de traitement total du traitement de réduction et du traitement de nitruration n'est pas plus de 36h.

9. Procédé de production des particules ferromagnétiques selon l'une quelconque des revendications 5 à 8, dans lequel la température du traitement de nitruration est de 100 à 200 °C.

10. Aimant anisotropique comprenant les particules ferromagnétiques telles que définies dans l'une quelconque des revendications 1 à 4.

11. Aimant lié comprenant les particules ferromagnétiques telles que définies dans l'une quelconque des revendications 1 à 4.

12. Utilisation des particules ferromagnétiques selon l'une quelconque des revendications 1 à 4 dans un aimant anisotropique ou un aimant lié.
